# EUROPÄISCHE PATENTSCHRIFT

(11) **EP 3 835 712 B1**
(45) Veröffentlichungstag und Bekanntmachung des Hinweises auf die Patenterteilung: **06.08.2025**
(21) Anmeldenummer: 20208074.3
(22) Anmeldetag: 17.11.2020
(51) Int. Cl.: G01B 3/06, F16C 11/10

(54) **GLIEDERMASSSTAB**
FOLDING RULER
MÈTRE PLIANT

(30) Priorität: 11.12.2019 DE 202019106896 U
(43) Veröffentlichungstag der Anmeldung: 16.06.2021
(73) Patentinhaber: Stabila Messgeräte Gustav Ullrich GmbH, 76855 Annweiler (DE)
(72) Erfinder: KALLABIS, Gabriel, 76848 Spirkelbach (DE); ZEMCÍK, Marek, 695 03 Hodonín (CZ); VACHEK, Pavel, 696 12 Hovorany (CZ); ZGAZAR, Zdenek, 696 81 Bzenec (CZ)
(74) Vertreter: Stoffregen, Hans-Herbert

(56) Entgegenhaltungen:
- EP-A1- 2 259 007
- EP-A1- 2 677 269
- DE-A1- 2 449 877
- DE-A1- 4 109 412
- DE-C- 14 289
- DE-U- 6 947 931
- DE-U- 7 412 360
- US-A- 1 983 651
- US-A- 955 314

## Beschreibung

Die Erfindung bezieht sich auf einen Gliedermaßstab mit langgestreckten flachen Gliedern, die paarweise über eine Gelenkverbindung miteinander und um eine Achse drehbar verbunden sind, wobei die Gelenkverbindung eine erste mit einem ersten Glied und eine zweite mit einem zweiten Glied verbundene Gelenkplatte aufweist und wobei
- die erste Gelenkplatte zwei Rastvorsprünge aufweist, die vorzugsweise diametral zu der Achse angeordnet sind, und
- die zweite Gelenkplatte zwei erste Rastaussparungen aufweist,
wobei die Gelenkplatten in einer ersten Position bei vollständig gefaltet oder fluchtend zueinander ausgerichteten Gliedern verrasten und in einer zweiten Position verrasten, in der die Glieder zueinander einen Winkel α, insbesondere α = 90°, einschließen,

Ein diesbezüglicher Gliedermaßstab ist der EP 2 677 269 A1 (DE 10 2009 007 556 A1) zu entnehmen. Um die Glieder in zwei unterschiedlichen Stellungen zu verrasten, gehen von einer ersten Gelenkplatte zwei Federzungen mit Rastvorsprüngen und von einer dieser zugeordneten und von einem anderen Glied des Gliedermaßstabs ausgehenden zweiten

Gelenkplatte vier Rastaussparungen aus, die komplementär zu den Rastvorsprüngen ausgebildet sein sollten. Um ein spielfreies Verrasten sicherzustellen, müssen sämtliche Rastaussparungen passgenau an die Rastvorsprünge angepasst sein. Dies kann insbesondere aufgrund der kleinen Abmessungen zu Problemen führen.

Der WO 2006/086933 A1 ist ein Gliedermaßstab mit Hoch- und Tiefplatte zu entnehmen, die mittig oder im Randbereich vier Rastvorsprünge bzw. vier Rastvertiefungen aufweisen. Ferner sind Abschnitte der Hochplatte mit federnden Vorsprüngen und die Tiefplatte mit Vertiefungen versehen, in die Vorsprünge eingreifen können.

Die DE 24 49 877 A1 bezieht sich auf einen Gliedermaßstab aus Kunststoff, bei dem die zueinander verschwenkbaren Glieder in zwei um 90° versetzten Stellungen einrastbar sind. Hierzu weist jedes der Glieder zwei Nocken und zwei Vertiefungen auf.

Gegenstand der DE 41 36 509 A1 ist ein vorzugsweise aus Kunststoff bestehender Gliedermaßstab mit Feststellvertiefungen in einem Glied und Verstellerhöhungen in einem mit dem ersten Glied verbundenen zweiten Glied, die ineinandergreifen. Die Glieder sind über eine Gelenkstelle miteinander verbunden, die einen pilzförmigen Schnappvorsprung und eine dazu komplementäre Rastaussparung aufweist.

Ein Gliedermaßstab aus Holz ist aus der DE 43 02 699 A1 bekannt. Zum Verrasten sind Rastaussparungen vorgesehen, in die Rastkörper eingreifen, die in einem Stanzteil eingeprägt sein können.

Bei einem Gliedermaßstab aus Kunststoff nach der DE 74 12 360 U1 sind zum Verrasten der Glieder angeformte Vertiefungen und Erhebungen vorgesehen.

Der US 955 314 A ist ein Gliedermaßstab zu entnehmen, dessen Glieder Gelenkplatten aufweisen, die einen Vorsprung und Aussparungen aufweisen, um die Glieder in gefalteter und vollständig ungefalteter Position fixieren zu können.

Der US 1,983,651 A ist ein Gliedermaßstab zu entnehmen, dessen Glieder in gewünschten Winkeln zueinander verrastet werden können. Hierzu weisen die Glieder Gelenkplatten mit Prägungen auf, über die ein Verrasten ermöglicht wird.

Der vorliegenden Erfindung liegt die Aufgabe zugrunde, ein Gliedermaßstab eingangs genannter Art so weiterzubilden, dass ein Verrasten bei einfachem konstruktiven Aufbau sichergestellt ist.

Zur Lösung der Aufgabe sieht die Erfindung im Wesentlichen vor, dass die erste Gelenkplatte zumindest eine weitere Rastaussparung in Form eines Freibereichs in der ersten Gelenkplatte und die zweite Gelenkplatte zumindest einen weiteren Rastvorsprung aufweist, wobei der zumindest eine weitere Rastvorsprung in einem federnden Abschnitt der zweiten Gelenkplatte ausgebildet ist oder von diesem ausgeht, wobei in der ersten Position der Glieder die zwei ersten Rastvorsprünge der ersten Gelenkplatte in die zwei ersten Rastaussparungen der zweiten Gelenkplatte einrasten und in der zweiten Position der zumindest eine weitere Rastvorsprung der zweiten Gelenkplatte in die zumindest eine weitere Rastaussparung der ersten Gelenkplatte einrastet.

Die erfindungsgemäße Gelenkverbindung zeichnet sich durch eine einfache Konstruktion aus, wobei insbesondere eine Schwächung der Glieder durch Ausbildung von Ausnehmungen in den Gliedern nicht zwingend erforderlich ist, wie diese durch den eingangs genannten Stand der Technik vorgesehen sind.

Insbesondere ist vorgesehen, dass die erste Gelenkplatte eine weitere Rastaussparung und die zweite Gelenkplatte zwei weitere Rastvorsprünge oder die erste Gelenkplatte zwei weitere Rastvorsprünge und die zweite Gelenkplatte eine weitere Aussparung oder die erste Gelenkplatte zwei weitere Rastaussparungen und die zweite Gelenkplatte zwei weitere Rastvorsprünge aufweisen.

Bevorzugterweise ist die Gelenkverbindung des Gliedermaßstabes dadurch gekennzeichnet, dass der Freibereich eine Ausstanzung in der ersten Gelenkplatte ist.

Insbesondere ist vorgesehen, dass die zwei weiteren Rastaussparungen und/oder die zwei weiteren Rastvorsprünge diametral gegenüberliegend zu der Achse angeordnet sind.

Besonders hervorzuheben ist auch, dass die zweite Gelenkplatte zwei erste Rastaussparungen und zwei weitere Rastvorsprünge aufweist, die entlang einer gemeinsamen Geraden angeordnet sind, die die Achse schneidet.

Um ein Einrasten des bzw. der weiteren Rastvorsprünge zu erleichtern, ist vorgesehen, dass der zumindest eine weitere Rastvorsprung in einem federnden Abschnitt der zweiten Gelenkplatte ausgebildet ist oder von diesem ausgeht.

Hierzu wird insbesondere vorgeschlagen, dass der federnde Abschnitt durch einen bereichsweise freigeschnittenen Bereich der zweiten Gelenkplatte gebildet ist.

Dabei kann der zumindest eine weitere Rastvorsprung eine kugelabschnittförmige Geometrie aufweisen.

Sind zuvor Merkmale in Kombination erläutert worden, so sind diese auch isoliert als erfinderisch zu werten und gegebenenfalls mit anderen Merkmalen zu kombinieren.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen, wobei der Schutzumfang der gegenwärtigen Erfindung durch die anhängigen Ansprüche festgelegt wird.

Es zeigen:
- Fig. 1: eine Explosionsdarstellung von Abschnitten zweier Glieder eines Gliedermaßstabs mit diese gelenkig verbindenden Gelenkplatten,
- Fig. 2: eine nicht zu der Erfindung gehörende erste Ausführungsform einer ersten Gelenkplatte,
- Fig. 3: eine nicht zu der Erfindung gehörende erste Ausführungsform einer zweiten Gelenkplatte,
- Fig. 4: einen Schnitt entlang der Linie A-A in Fig. 3,
- Fig. 5: eine nicht zu der Erfindung gehörende zweite Ausführungsform einer ersten Gelenkplatte,
- Fig. 6: einen Schnitt entlang der Linie B-B in Fig. 5,
- Fig. 7: eine nicht zu der Erfindung gehörende zweite Ausführungsform einer zweiten Gelenkplatte,
- Fig. 8: eine nicht zu der Erfindung gehörende dritte Ausführungsform einer zweiten Gelenkplatte,
- Fig. 9: eine nicht zu der Erfindung gehörende dritte Ausführungsform einer ersten Gelenkplatte,
- Fig. 10: eine vierte Ausführungsform einer ersten Gelenkplatte in Draufsicht,
- Fig. 11: die Gelenkplatte gemäß Fig. 10 in perspektivischer Darstellung von oben,
- Fig. 12: die Gelenkplatte gemäß Fig. 10 und 11 in perspektivischer Darstellung von unten,
- Fig. 13: eine vierte Ausführungsform einer zweiten Gelenkplatte in Draufsicht,
- Fig. 14: die Gelenkplatte gemäß Fig. 13 in perspektivischer Darstellung von oben,
- Fig. 15: die Gelenkplatte gemäß Fig. 13 und 14 in perspektivischer Darstellung von unten,
- Fig. 16: eine nicht zu der Erfindung gehörende fünfte Ausführungsform einer zweiten Gelenkplatte,
- Fig. 17: eine nicht zu der Erfindung gehörende fünfte Ausführungsform einer ersten Gelenkplatte und
- Fig. 18: einen Abschnitt eines Gliedes mit Vertiefung zur Aufnahme der zweiten Gelenkplatte.

Anhand der Fig. werden Verbindungen für langgestreckte z.B. aus Holz oder Kunststoff bestehende flache Glieder eines Gliedermaßstabes erläutert, um die Glieder in zwei Stellungen zueinander zu verrasten. Insbesondere sollen die Glieder zueinander um zwei um 90° Grad voneinander abweichende Positionen verrasten können. Eine Position ist diejenige, in der die Glieder vollständig ausgefaltet bzw. fluchtend zueinander ausgerichtet sind. Eine zweite Stellung ist diejenige, in der die Glieder zueinander einen Winkel α einschließen, der insbesondere 90° Grad beträgt, ohne dass hierdurch eine Einschränkung der erfindungsgemäßen Lehre erfolgen soll. Die Verrastungsmittel können jedoch auch derart ausgebildet sein, dass die Glieder einen Winkel z.B. von 45° Grad zueinander einschließen.

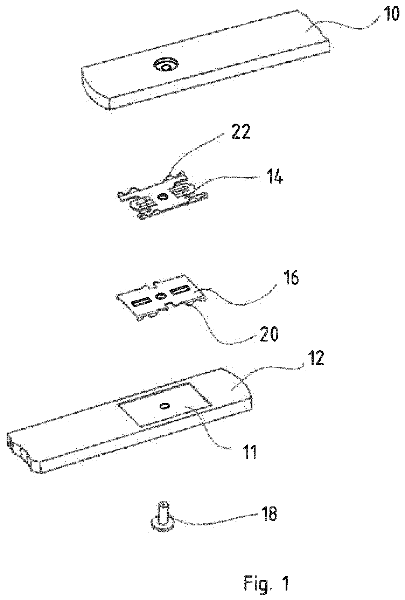

In Fig. 1 ist eine Explosionsdarstellung von zwei Gliedern 10, 12 eines Gliedermaßstabes dargestellt, die über eine aus einer ersten Gelenkplatte 14 und einer zweiten Gelenkplatte 16 bestehende Gelenkverbindung miteinander verbunden sind. Die Gelenkplatten 14, 16 sind im Endbereich der Glieder 10, 12 mit diesen verbunden. Ferner wird die Gelenkverbindung von einem Nietbolzen 18 oder ein sonstiges Verbindungselement durchsetzt, der mit den Gliedern 10, 12 verbunden ist und eine Achse vorgibt, um die die Glieder 10, 12 verschwenkbar sind.

Die Gelenkplatten 14, 16 können z.B. aus Stahlblech, wie gehärtetem Federstahl, bestehen und z.B. eine Dicke zwischen 0,3 mm und 0,4 mm aufweisen, um beispielhaft Zahlenwerte zu nennen. Die Gelenkplatten 14, 16 sind ferner vorzugsweise Stanzprägeteile.

Um die Gelenkplatten 14, 16 mit den Gliedern 10, 12 zu verbinden, ragen senkrecht zu den von den Gelenkplatten 14, 16 aufgespannten Ebenen fahnenartige Krallen ab, von denen rein beispielhaft zwei mit dem Bezugszeichen 20, 22 gekennzeichnet sind. Über die Krallen 20, 22 werden die Gelenkplatten 14, 16 in den Gliedern 10, 12 fixiert und verankert. Insoweit wird jedoch auf bekannte Techniken von Gliedermaßstäben verwiesen.

Wie prinzipiell dem Glied 12 zu entnehmen ist, weist dieses eine insbesondere durch Fräsen hergestellte Vertiefung 11 auf, die an die Gelenkplatte 16 derart angepasst ist, dass diese in die Ausnehmung 11 in einem Umfang eingesetzt werden kann, dass Oberseite der Gelenkplatte 16 mit Oberseite des Gliedes 12 fluchtet. Eine entsprechende Aussparung bzw. Fräsung kann auch in dem Glied 10 für die Gelenkplatte 14 vorgesehen sein. Durch diese Maßnahmen liegen die Glieder 10, 12 in den Raststellungen im Wesentlichen vollflächig aufeinander.

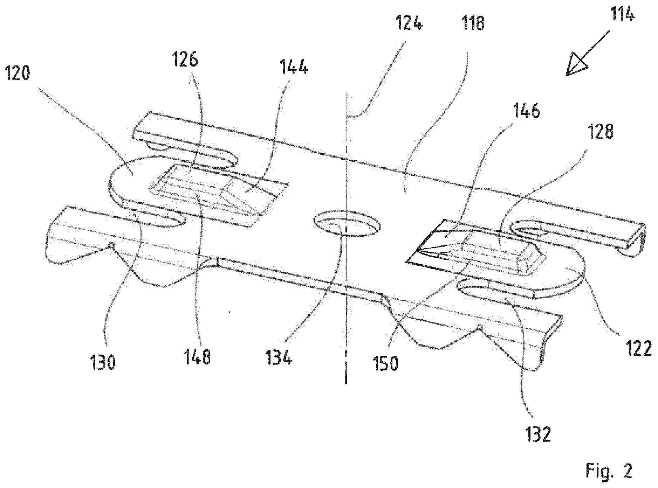

In Fig. 2 ist eine erste Ausführungsform einer ersten Gelenkplatte 114 dargestellt, die auch als Hochplatte zu bezeichnen ist. Die Gelenkplatte 114 besteht aus einem weitgehend planen Basiskörper 118, der insgesamt zwei federnde Abschnitte 120, 122 aufweist. Die federnden Abschnitte 120, 122 sind diametral zu der Achse 124 angeordnet, die durch die Längsachse des Nietbolzens 18 vorgegeben ist, und verlaufen in Längsachsenrichtung des Basiskörpers 118 und damit nach dem Befestigen auf dem Glied 10 auch in dessen Längsrichtung.

Wie die zeichnerische Darstellung verdeutlicht, sind die federnden Abschnitte 120, 122 von dem Basiskörper 118 durch Aussparungen bzw. Schlitze getrennt, von denen zwei rein beispielhaft mit den Bezugszeichen 130, 132 gekennzeichnet sind.

Von den federnden Abschnitten 120, 122 gehen Rastvorsprünge 126, 128 aus, die diametral zur Achse 124 und auf einer in Längsrichtung des Gliedes verlaufenden Geraden angeordnet sind, die die Achse 124 schneidet.

Des Weiteren erkennt man, dass die Achse 124 eine Bohrung 134 im Basisabschnitt 118 durchsetzt, die von dem Nietbolzen 18 durchdrungen ist.

Die der Bohrung 134 zugewandten Flächen 144, 146 der Rastvorsprünge 126, 128 verlaufen rampenförmig und gehen verrundet in die jeweiligen schräg zueinander verlaufenden Seitenflächen über, von denen zwei rein beispielhaft mit den Bezugszeichen 148, 150 gekennzeichnet sind. Hierdurch wird ein Drehen der Glieder zueinander erleichtert.

Die Rastvorsprünge 126, 128 weisen im Ausführungsbeispiel eine pyramidenstumpfförmige Geometrie auf, wobei die Grundfläche ein regelmäßiges Viereck ist, jedoch mit ungleichen Seitenkanten. Es handelt sich folglich um einen schiefen Pyramidenstumpf.

Der Gelenkplatte 114 ist eine zweite Gelenkplatte 152 zugeordnet, die auch als Tiefplatte zu bezeichnen ist. Die Tiefplatte 152 ist mit dem Glied verbunden, zu dem das Glied verschwenkbar ist, von dem die Hochplatte oder erste Gelenkplatte 114 ausgeht. In der zeichnerischen Darstellung der Fig. 1 würde mit dem Glied 10 die Hoch- oder erste Gelenkplatte 114 und mit dem Glied 12 die Tief- oder zweite Gelenkplatte 152 verbunden sein.

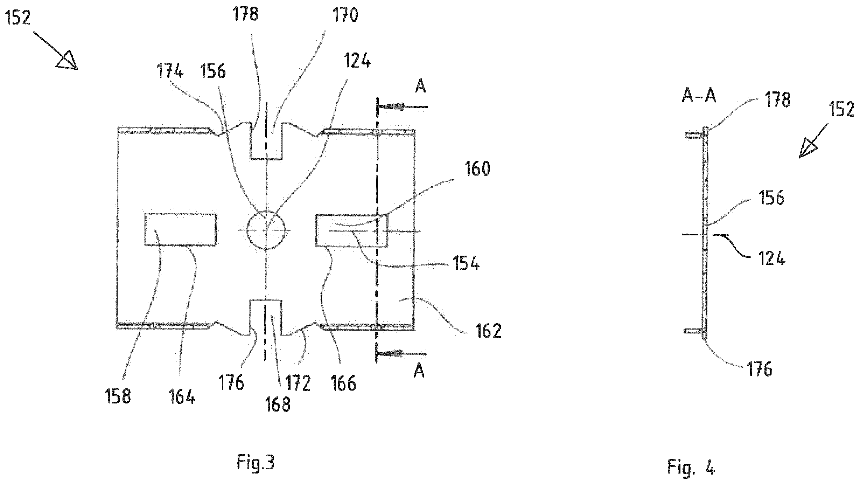

Die zweite Gelenkplatte 152 zeichnet sich dadurch aus, dass entlang deren Längsachse 154, die mit der des Gliedes 12 zusammenfällt, diametral zur von der Achse 124 durchsetzten Bohrung 156 verlaufende erste Rastaussparungen 158, 160 vorgesehen sind, die z.B. durch Ausstanzungen hergestellt werden. Die Rastaussparungen 158, 160 weisen eine Höhe auf, die gleich der Dicke des platten bzw. ebenen Basisabschnitts 162 der Gelenkplatte 152 ist, wie die Schnittdarstellung gemäß Fig. 4 verdeutlicht. Entsprechend sollte die Höhe des jeweiligen Rastvorsprungs 126, 128 der Dicke des Basisabschnitts 162 entsprechen.

Die entsprechenden ersten Rastaussparungen 158, 160 weisen vorzugsweise zumindest in den radial zu der Achse 124 verlaufenden Längsrändern, von denen zwei beispielhaft mit dem Bezugszeichen 164, 166 gekennzeichnet sind, Verrundungen auf, um das Einbringen der Rastvorsprünge 126, 128 in die Rastaussparungen 158, 160, also das Einrasten leichtgängig zu machen. Entsprechendes gilt, wenn die Glieder 10, 12 zueinander verdreht werden, also die Rastvorsprünge 126, 128 aus den ersten Rastaussparungen 158, 160 herausgehoben werden.

Neben den in Längsrichtung des Basisabschnitts oder -elements 162 und damit der Gelenkplatte 152 verlaufenden ersten Rastaussparungen 158, 160 sind in der Basisplatte 162 zwei zweite Rastaussparungen 168, 170 gleichfalls vorzugsweise durch Stanzen ausgebildet, die randseitig offen sind, wie die zeichnerische Darstellung verdeutlicht, die im Übrigen - wie sämtliche Figuren - selbsterklärend ist.

Die zweiten Rastaussparungen 168, 170 gehen von Ausbuchtungen 172, 174 des Basiselementes 162 aus, wobei der Abstand zwischen den Scheitelpunkten 176, 178 der Ausbuchtungen 172, 174 in etwa der Breite oder der Breite des Gliedes 12 entsprechen kann.

Eine entsprechende Gelenkplatte 152 ist problemlos durch einen Biegestanzstempel herstellbar, wobei grundsätzlich besondere Ausbuchtungen bzw. Aushebungen in dem Glied 12 nicht erforderlich sind, um ein Verrasten zu ermöglichen.

Selbstverständlich wird die Erfindung nicht verlassen, wenn unterhalb der ersten und/oder zweiten Rastaussparungen 158, 160 bzw. 168, 170 Vertiefungen in dem Glied 12 ausgehoben sind, um das Verrasten zu verstärken, wobei die Höhe der Rastvorsprünge 126, 128 größer als in dem Fall sein kann, in dem die Basisplatte 118 (Basiskörper) unterseitig vollständig plan auf dem Glied aufliegt. Grundsätzlich ist dies jedoch nicht erforderlich.

Auf Grund der erfindungsgemäßen Lehre rasten die Rastvorsprünge 126, 128 mit gleicher Tiefe sowohl in die ersten als auch die zweiten Rastaussparungen 158, 160 bzw. 168, 170 ein.

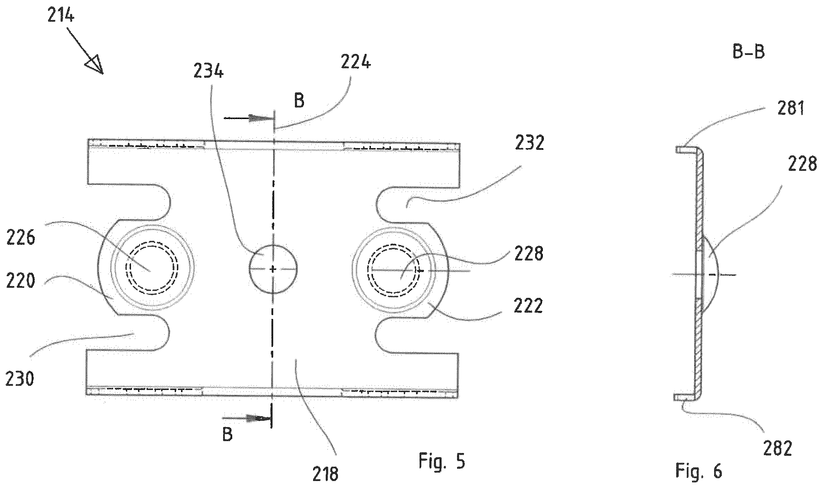

Den Fig. 5 bis 7 ist eine weitere Ausführungsform einer ersten und zweiten Gelenkplatte 214, 252 zu entnehmen, die gleichfalls als Hoch- bzw. Tiefplatte zu bezeichnen sind und mit jeweils einem Glied eines Gliedermaßstabs verbunden werden, damit die Glieder zueinander in verschiedenen Positionen verrasten können.

Dabei weist die erste Gelenkplatte 214 entsprechend dem Ausführungsbeispiel der Fig. 2 einen ebenen plattenförmigen Basiskörper 218 auf, in dem durch Freischnitte 230, 232 federnde Abschnitte 220, 222 gebildet sind, die in Längsrichtung des Basiskörpers 218 und somit der ersten Gelenkplatte 214 verlaufen und somit auch in Längsachsenrichtung des Gliedes, mit dem die Gelenkplatte 214 verbunden wird. Von den federnden Abschnitten 220, 222 gehen Rastvorsprünge 226, 228 aus, die im Ausführungsbeispiel als Hohlkugelabschnitte in den federnden Abschnitten 220, 222 durch insbesondere Prägen ausgeformt sind. Die Rastvorsprünge 226, 228 liegen auf einer Geraden, die die Achse 224 schneidet, um die die Glieder schwenkbar sind. Die Achse 224 durchsetzt eine Öffnung 234, die bei montierten Gelenkplatten 214, 252 von einem Nietbolzen durchsetzt ist, wie dies zuvor erläutert worden ist.

Von den Längsrändern des Basiselements 218 gehen fahnenartige Krallen aus, über die die Gelenkplatten 214, 252 in dem jeweiligen Glied des Gliedermaßstabs verankert werden. Beispielhaft sind zwei Krallen der ersten Gelenkplatte 214 mit dem Bezugszeichen 281, 282 gekennzeichnet.

Die erste Gelenkplatte 214 als Hochplatte ist der auch als Tiefplatte bezeichneten zweiten Gelenkplatte 252 zugeordnet, die ein in Draufsicht rechteckförmiges plattenförmiges Basiselement oder Basiskörper oder -abschnitt 262 mit mittig verlaufender Bohrung 256 aufweist, die bei montiertem Gliedermaßstab fluchtend zu der Bohrung 234 in der ersten Gelenkplatte 214 verläuft. Entsprechend der Anordnung der Rastvorsprünge 226, 228 sind in Längsachsenrichtung des Basiselements 262 erste Rastaussparungen 258, 260 geformt, deren Innengeometrie der Außengeometrie der Rastvorsprünge 226, 228 angepasst ist, also im Ausführungsbeispiel eine Kugelabschnittgeometrie. Die ersten Rastaussparungen 258, 260 liegen auf einer Geraden, die die Achse 224 schneidet, um die die Glieder schwenkbar sind, die über die Gelenkplatten 214, 252 verbunden sind.

Im Ausführungsbeispiel sollen die mit den Gelenkplatten 214, 252 verbundenen Glieder in zwei Stellungen verrasten, und zwar in fluchtender Ausrichtung - aufeinanderliegend oder vollständig auseinandergefaltet - und um eine hierzu senkrechten Position. Die fluchtende Ausrichtung erfolgt dann, wenn die Rastvorsprünge 226, 228 in die Rastaussparungen 258, 260 eintauchen und somit einrasten, die als erste Rastaussparungen 258, 260 bezeichnet werden.

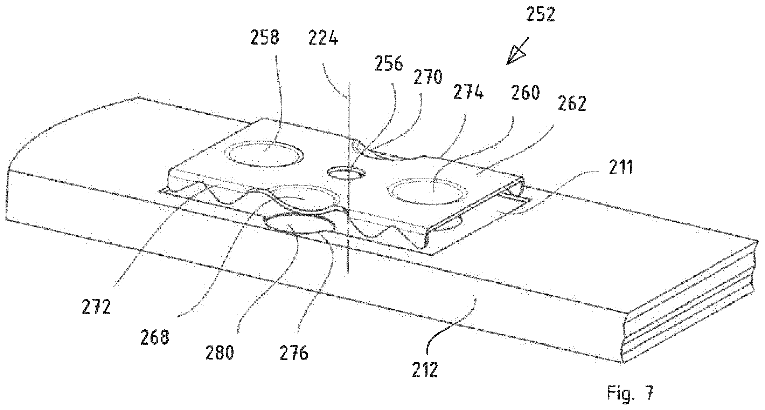

Entsprechend dem Ausführungsbeispiel in Fig. 3 sind zwei zweite Rastaussparungen 268, 270 vorgesehen, von denen erste Abschnitte vom jeweiligen Längsrand 272, 274 des plattenförmigen Basiselements 262 ausgehen und eine Innengeometrie aufweisen, die jeweils einem Teil, insbesondere der Hälfte der Außengeometrie des Rastvorsprungs 226, 228 entspricht, also dann, wenn die Rastvorsprünge 226, 228 eine Halbkugelgeometrie aufweisen, eine Teil- bzw. Viertelkugelgeometrie. Damit ein vollständiges Eintauchen der Rastvorsprünge 226, 228 bei um 90° Grad versetzt zueinander verlaufenden Gliedern möglich ist, sind die an den ersten Abschnitten der zweiten Rastaussparungen 268, 270 angrenzenden Bereiche des Gliedes zur Bildung zweiter Abschnitte der zweiten Rastaussparungen 268, 270 ausgehoben, wie dies durch den Kreisabschnitt 276 in Fig. 7 angedeutet werden soll. Hierzu ist ein Abschnitt des Gliedes 212 dargestellt, mit dem die Gelenkplatte 252 verbunden ist und in dem ein Bereich 280 ausgehoben ist, an dem die Teilrastaussparung 268 der Gelenkplatte 252 angrenzt und eine Innengeometrie aufweist, die sicherstellt, dass einer der Rastvorsprünge 226, 228 dann, wenn die Glieder und somit die Gelenkplatten 214, 252 um 90° Grad zueinander verschwenkt sind, vollständig eintauchen kann und somit das gewünschte Einrasten ermöglicht wird. Entsprechend weist das Glied angrenzend zu dem in der zweiten Gelenkplatte verlaufenden ersten Abschnitt der Rastaussparung 270 einen Aushub auf.

Der jeweilige Aushub in dem Glied stellt dabei sicher, dass die als erster Abschnitt der zweiten Rastaussparung 268, 270 bezeichnete Teilrastaussparung vollständig in dem Glied eintauchen kann.

Sind im Ausführungsbeispiel die ersten Rastaussparungen 258, 260 vollständig und zweiten Rastaussparungen 268, 270 in die Gelenkplatte 252 teilweise eingeformt, so kann das Rasten auch dadurch realisiert werden, dass die Basisplatte 262 Aussparungen wie Ausstanzungen und das Glied unterhalb der Aussparungen Vertiefungen aufweist, in die die Rastvorsprünge 226, 228 eintauchen können. Die Rastaussparungen werden demzufolge von einem die entsprechenden Aussparungen begrenzenden Randbereich des Basiselements 262 und Vertiefungen in dem Glied gebildet.

Unabhängig von der Konstruktion tauchen die Rastvorsprünge 226, 228 und unabhängig von deren Stellung, also dann, wenn diese im Ausführungsbeispiel entlang der Längsachse der Gelenkplatte 252 und damit des Gliedes oder senkrecht hierzu verlaufen, gleich tief in die entsprechenden Rastaussparungen 258, 260 bzw. 268, 270 ein, und zwar unabhängig davon, ob die Rastaussparung vollständig oder nur abschnittsweise bzw. bereichsweise aus der Gelenkplatte 252 ausgebildet ist.

Ferner erkennt man in der Fig. 7, dass die Gelenkplatte 252 in eine Aussparung 211, wie Ausfräsung, in dem Glied 212 eingesetzt wird. Entsprechendes kann für die Gelenkplatte 214 gelten.

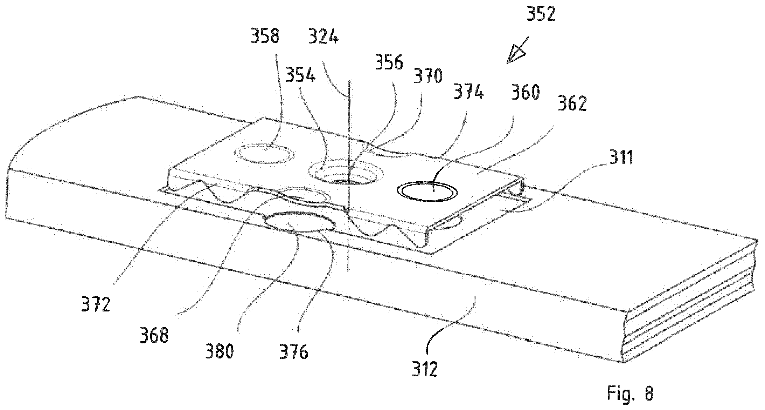

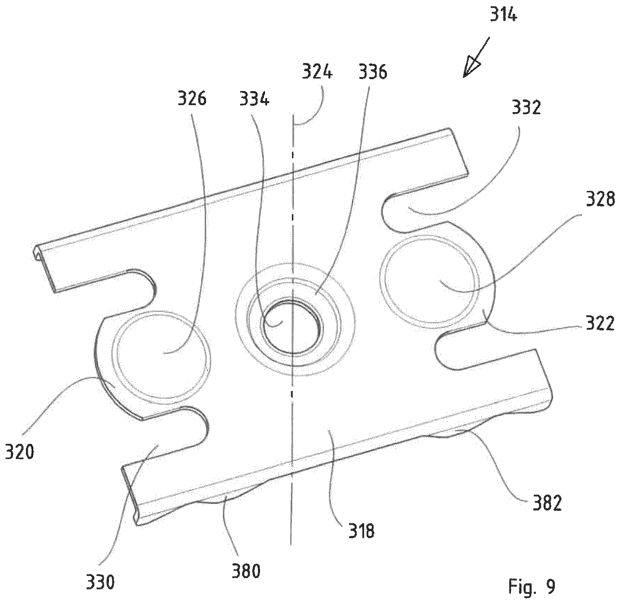

Den Fig. 8 und 9 sind weitere Ausführungsformen von Gelenkplatten 314, 352 zu entnehmen, die von der Konstruktion her, d.h. den Rastvorsprüngen 326, 328 und den Rastaussparungen 358, 360 bzw. 368, 370 denen des Ausführungsbeispiels der Fig. 5 bis 7 entsprechen, so dass auf die diesbezüglichen Ausführungen und Erläuterungen der Merkmale nachdrücklich verwiesen wird. Ein Unterschied zu den Gelenkplatten 214, 252 ist jedoch insoweit gegeben, als dass die in den ebenen plattenförmigen Basiskörpern 318, 362 vorhandenen und von der Drehachse 324 durchsetzten Öffnungen oder Bohrungen 334, 356 von topfförmigen Prägungen 336, 354 konzentrisch umgeben sind, die einen unterhalb der Unterseite des Basiskörpers 318, 362 verlaufenden ringförmigen Bereich aufweisen. Dieser Bereich stützt sich auf einer in der Ausfräsung 311 ausgebildeten Vertiefung ab. In dieser Ausfräsung 311 oder Aussparung ist die Gelenkplatte 314, 352 eingesetzt. Durch das Abstützen des ringförmigen Bereichs auf der Vertiefung ist eine hohe Stabilität im Bereich des Gelenks gewährleistet.

Ansonsten stimmen erwähntermaßen die Gelenkplatten 314, 352 konstruktiv mit den Gelenkplatten 214, 252 überein, so dass die entsprechenden Abschnitte bzw. Bereiche mit Bezugszeichen gekennzeichnet sind, die denen der Fig. 5 bis 7 entsprechen, jedoch um 100 erhöht sind.

Auch anhand der Fig. 8 soll verdeutlicht werden, dass die Gelenkplatten 314, 352 in Vertiefungen 311 des jeweiligen Gliedes 312 eingesetzt werden können, so dass die Oberfläche des ebenen plattenförmigen Basiskörpers 362 bzw. 318 quasi fluchtend in die Oberfläche des Gliedes 312 übergehen kann. Die Vertiefungen 311 können z.B. durch Fräsen herausgearbeitet werden.

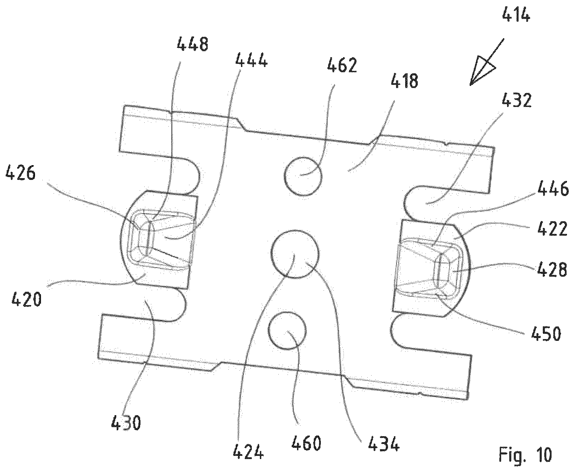

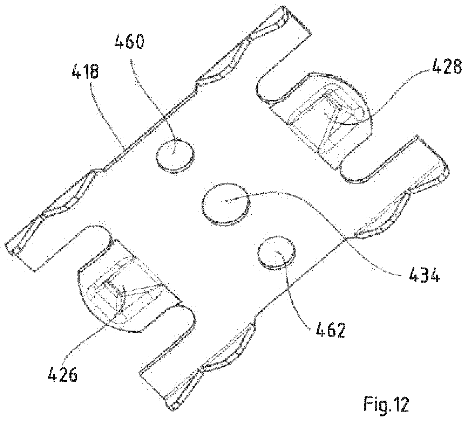

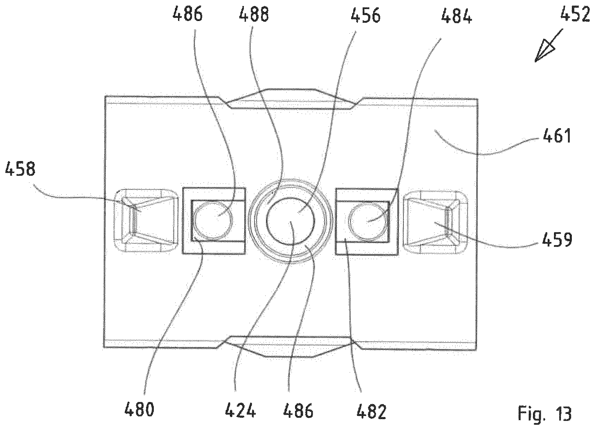

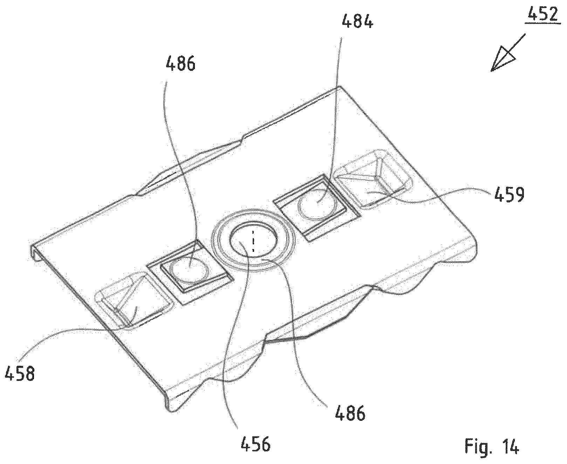

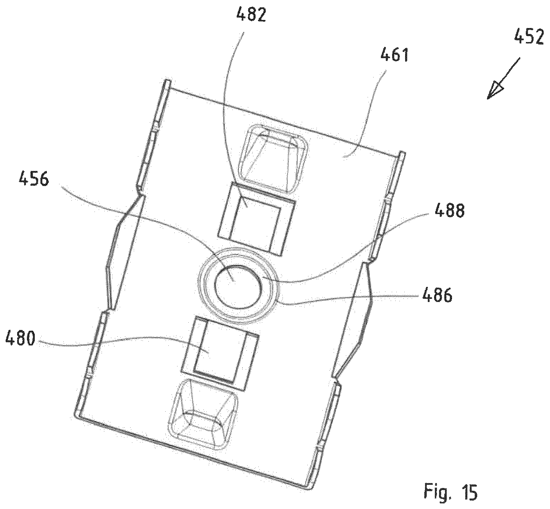

Eine vierte Ausführungsform einer Gelenkverbindung für Glieder eines Gliedermaßstabs ist den Fig. 10 bis 15 zu entnehmen. Dabei sind in Fig. 10 bis 12 eine als Hochplatte zu bezeichnende erste Gelenkplatte 414 und in den Fig. 13 bis 15 eine als Tiefplatte zu bezeichnende zweite Gelenkplatte 452 dargestellt.

Die erste Gelenkplatte 414 weist vom Prinzip her eine Geometrie bzw. eine Struktur auf, die den zuvor beschriebenen ersten Gelenkplatten entspricht, d.h., dass die Gelenkplatte 414 einen weitgehend planen plattenförmigen Basiskörper 418 mit zwei federnden Abschnitten 420, 422 aufweist, die diametral zu der Achse 424 angeordnet sind, die durch die Längsachse eines Nietbolzens vorgegeben ist. Die federnden Abschnitte 420, 422 erstrecken sich in Längsrichtung des Basiskörpers 418 und damit nach Befestigung auf dem Glied 10 in dessen Längsrichtung.

Die federnden Abschnitte 420, 422 sind von dem Basiskörper 418 durch Aussparungen bzw. Schlitze getrennt, von denen zwei rein beispielhaft mit den Bezugszeichen 430, 432 gekennzeichnet sind.

Von den federnden Abschnitten 420, 422 gehen in zuvor beschriebener Art Rastvorsprünge 426, 428 aus, die diametral zur Achse 424 auf einer in Längsrichtung des Glieds verlaufenden Geraden angeordnet sind, die die Achse 424 schneidet. Diese durchsetzt eine Bohrung 434 im Basisabschnitt 418, die von dem Nietbolzen durchdrungen ist.

Im Ausführungsbeispiel weisen die Rastvorsprünge 426, 428 ebenfalls eine - wie zuvor beschrieben - pyramidenstumpfförmige Geometrie auf, wobei die Grundfläche ein regelmäßiges Viereck ist, jedoch mit ungleichen Seitenkanten.

Dabei verlaufen die achsnah sich erstreckenden Flächen 444, 446 rampenförmig und gehen verrundet in die jeweiligen schräg zueinander verlaufenden Seitenflächen über, von denen zwei rein beispielhaft mit den Bezugszeichen 448 und 450 gekennzeichnet sind.

Des Weiteren weist die erste Gelenkplatte 414 und abweichend von den zuvor erläuterten Ausführungsbeispielen als weitere Rastaussparungen 460, 462 bezeichnete Öffnungen oder Bohrungen auf, die im Ausführungsbeispiel gleichfalls diametral gegenüberliegend zu der Achse 424 angeordnet sind und somit auf einer Geraden liegen, die die Achse 424 schneidet. Im Ausführungsbeispiel verläuft die Gerade um 90° gedreht zu der Geraden, auf der die Rastvorsprünge 426, 428 liegen.

In dem Ausführungsbeispiel weisen die weiteren Rastaussparungen 460, 462 umfangsseitig eine Kreisgeometrie auf. Es können auch andere Formen gewählt werden, und zwar in Abhängigkeit von der Geometrie von weiteren Rastvorsprüngen, die nachstehend beschrieben werden und von der zweiten Gelenkplatte 452 ausgehen.

Die weiteren Rastaussparungen 460, 462 sind insbesondere durch Stanzen in dem plattenförmigen bzw. planen Basiskörper 418 ausgebildet. Die Höhe der weiteren Rastaussparungen 460, 462 entspricht somit der Dicke des Basiskörpers 418.

Verlaufen die die Rastvorsprünge 426, 428 schneidenden Gerade senkrecht zu der die weiteren Rastaussparungen 460, 462 schneidenden Gerade unter einem Winkel von 90°, so können diese auch einen anderen Winkel einschließen, und zwar abhängig davon, unter welchem Winkel die Glieder des Gliedermaßstabs zueinander verrasten sollen.

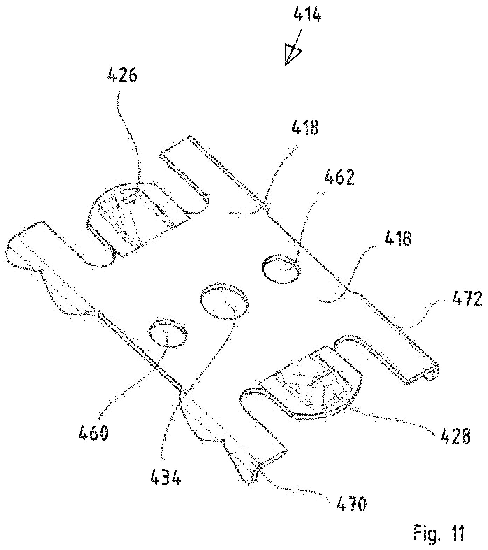

Insbesondere erkennt man aus der Fig. 11, die eine perspektivische Darstellung der Gelenkplatte 414 von oben darstellt, dass von den Längsrändern 470, 472 des Basiskörpers bzw. Basisabschnitts 418 der Gelenkplatte 414 fahnenartige Krallen ausgehen, um die Gelenkplatte 414 mit einem Glied des Gliedermaßstabes zu verbinden.

Im Übrigen verdeutlicht eine Zusammenschau der Darstellungen der Fig. 10 bis 11 Aufbau und Geometrie der Gelenkplatte 414, so dass auf die diesbezügliche Offenbarung in der Zeichnung verwiesen wird.

Die der ersten Gelenkplatte 414 zugeordnete zweite Gelenkplatte 452 weist gleichfalls einen plattenförmigen Basiskörper 461 wie die zuvor erläuterten Ausführungsbeispiele auf. Die Basisplatte bzw. der Basiskörper 461 weist mittig eine Bohrung 456 auf, die von der Achse 424 durchsetzt ist.

Den Rastvorsprüngen 426, 428 der ersten Gelenkplatte 414 sind erste Rastaussparungen 458, 459 in dem Basiskörper 461 zugeordnet, die entlang einer die Achse 424 schneidenden Geraden und in Längsachsenrichtung des Basiskörpers 461 angeordnet sind. Somit können die Rastvorsprünge 426, 428 in die ersten Rastaussparungen 458, 459 einrasten, wenn die mit den Gelenkplatten 414, 452 verbundenen Glieder zueinander einen Winkel von 180° einschließen oder fluchtend zueinander ausgerichtet sind, also aufeinanderliegen unter der Voraussetzung, dass die Gelenkplatte 452 mit ihrer Längsachse fluchtend zu der Längsachse des Gliedes verläuft.

Abweichend von den vorherigen Konstruktionen weist der Basiskörper 461 der zweiten Gelenkplatte 452 zwei weitere federnde Abschnitte 480, 482 auf, von denen weitere Rastvorsprünge 484, 486 ausgehen, die dann in die weiteren Rastaussparungen 460, 462 der ersten Gelenkplatte 414 einrasten, wenn die Glieder, mit denen die Gelenkplatten 414, 452 verbunden sind, einen rechten Winkel zueinander einschließen; denn die weiteren Rastaussparungen 460, 462 verlaufen erwähntermaßen auf einer Geraden, die senkrecht zu derjenigen sich erstreckt, auf denen die Rastvorsprünge 426, 428 liegen, da die federnden Abschnitte 480, 482 von einer Geraden geschnitten werden, entlang der die Rastaussparungen 458, 459 angeordnet sind und die die Achse 424 schneidet.

Der Abstand der weiteren Rastvorsprünge 484, 486 zu der Achse 424 ist auf den Abstand der weiteren Rastaussparungen 460, 462 abgestimmt, um ein Verrasten sicherzustellen.

Die federnden Abschnitte 480, 482 sind durch Ausschnitte in der Basisplatte bzw. des Basiskörpers 461 begrenzt, wie die zeichnerischen Darstellungen verdeutlichen.

Im Ausführungsbeispiel sind die weiteren Rastvorsprünge 484, 486 oberflächenseitig kugelabschnittförmig ausgebildet, so dass entsprechend die weiteren Rastaussparungen 460, 462 geometrisch angepasst sind, also entsprechend der zeichnerischen Darstellung eine Kreisscheibengeometrie aufweisen.

Die Gelenkplatte 452 wird ebenfalls über die den Figuren zu entnehmenden krallenförmigen Randabschnitten mit einem Glied des Gliedermaßstabes verbunden.

Ferner weist im Ausführungsbeispiel der Basiskörper 461 eine die Bohrung 456 konzentrisch umgebende Prägung 486 auf, die über der Oberseite des Basiskörpers 461 vorsteht und einen kreisringförmigen, also kranzförmigen Bereich 488 aufweist, dessen Außenfläche parallel zur Oberfläche des Basiskörpers 461 verläuft. Der Bereich 488 stützt sich auf der Oberseite der Gelenkplatte 452 ab, so dass sich weitgehend die verbleibenden Bereiche der Basiskörper 418, 461 der Gelenkplatten 414, 452 beim Verschwenken der Glieder nicht berühren, mit Ausnahme der Rastvorsprünge 426, 428 bzw. 484, 486.

Im Übrigen sind die Fig. 13 bis 15 wiederum selbsterklärend, so dass auf deren Offenbarung ausdrücklich hingewiesen wird. Auch sind die in den Ausführungsbeispielen der Fig. 1 bis 9 erläuterten konstruktiven Merkmale, die sich in den Gelenkplatten 414, 452 wiederfinden, klar erkennbar und somit offenbart.

Insbesondere erkennt man auch, dass die Rastaussparung 458, 459 eine Innengeometrie aufweist, die an die Außengeometrie der Rastvorsprünge 426, 428 angepasst ist, um ein sicheres Einrasten zu ermöglichen, wobei weitgehend ein Spiel vermieden wird.

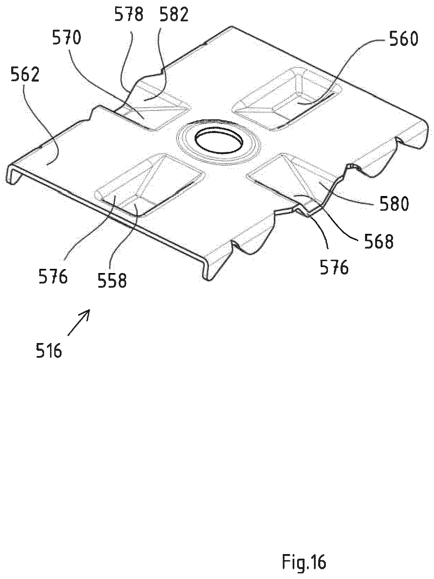

Das den Fig. 16 bis 18 zu entnehmende Ausführungsbeispiel einer Gelenkverbindung eines Gliedermaßstabs weist ebenfalls eine als Hochplatte zu bezeichnende erste Gelenkplatte 514 und eine als Tiefplatte zu bezeichnende zweite Gelenkplatte 516 auf, die mit Gliedern eines Gliedermaßstabs verbunden werden, um die Glieder zueinander zu verschwenken und in zwei Stellungen zueinander zu verrasten, und zwar in einer ersten Stellung, in der die Glieder fluchtend aufeinanderliegen oder vollständig auseinandergefaltet sind, und in einer zweiten Stellung, in der die Glieder einen Winkel von 90° zueinander einschließen.

Auch wenn der Winkel von 90° bevorzugt ist, können auch bei entsprechender Ausbildung der Tiefplatten, also der Position der Rastaussparungen, andere Winkel zum Verrasten vorgegeben werden.

Die erste Gelenkplatte 514 weist entsprechend der zuvor erläuterten Ausführungsbeispiele einen plattenförmigen Basiskörper 518 mit von dessen Längsrändern ausgehenden abgewinkelten fahnenartigen Krallen auf, von denen zwei rein beispielhaft mit dem Bezugszeichen 530, 532 gekennzeichnet sind, über die die Hochplatte 514 mit einem Glied des Gliedermaßstabs verbunden wird.

Die erste Gelenkplatte 514 weist entlang deren Längsachse sich erstreckende federnde Abschnitte 520, 522 auf, aus denen Rastvorsprünge 526, 528 geformt sind, die die Geometrie eines asymmetrischen Pyramidenstumpfabschnitts aufweisen. Somit weisen die Rastvorsprünge 526, 528 in Richtung einer von einer Achse durchsetzten Bohrung 556 rampenförmig verlaufende sich entlang der Längsachse der ersten Gelenkplatte verlaufende Flächen auf, die in schräg zueinander verlaufende Seitenflächen übergehen, die in der Ebene enden, die von dem plattenförmigen Basiskörper 518 aufgespannt wird.

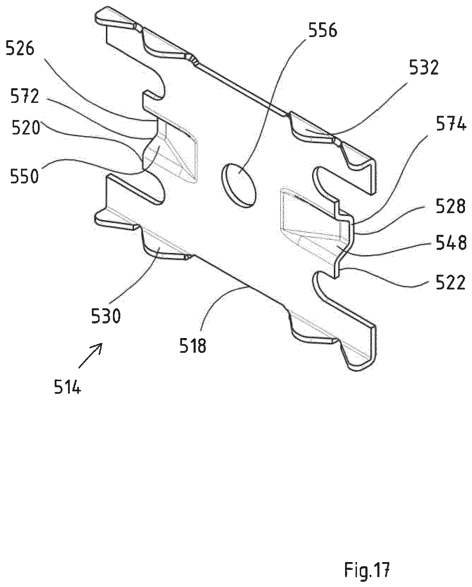

Insoweit ist auf die zuvor erläuterten Ausführungsbeispiele, insbesondere auf das der Fig. 2 bis 4 zu verweisen. Abweichend von den diesem Ausführungsbeispiel zu entnehmenden Rastvorsprüngen 126, 128 sind die Rastvorsprünge 526, 528 nach dem Ausführungsbeispiel der Fig. 17 endseitig abgeschnitten und somit offen, also nicht verschlossen, wie sich selbsterklärend aus der Fig. 17 ergibt.

Die Tiefplatte oder zweite Gelenkplatte 516 weist zwei erste Rastaussparungen 558, 560, die sich entlang der Längsachse der Gelenkplatte 516 erstrecken, und zwei zweite Rastaussparungen 568, 570 auf, die auf einer senkrecht zu der Längsachse verlaufenden Geraden liegen, um ein Verrasten der Glieder, und zwar in um 90° versetzten Stellungen, zu ermöglichen. Die Längsachse und die Gerade schneiden die Achse, um die die Glieder schwenkbar sind.

Die ersten Rastaussparungen 558, 560 sind umfangsseitig vollständig geschlossen, verlaufen also innerhalb des plattenförmigen Basiskörpers 562, von dessen Längsrändern ebenfalls krallenförmige Abschnitte ausgehen, um die Gelenkplatte 516 mit einem Glied zu verbinden.

Die zweiten Rastaussparungen 568, 570 sind randseitig offen, weisen jedoch eine axiale Erstreckung auf, die der der Rastvorsprünge 526, 528 entsprechen, d.h., dass dann, wenn die Rastvorsprünge 526, 528 in den zweiten Rastaussparungen 568, 570 einrasten, die Stirnränder 572, 574 der Rastvorsprünge 526, 528 in einer Ebene oder in etwa in einer Ebene verlaufen, die von den Stirnrändern 576, 578 der zweiten Rastaussparungen 568, 570 aufgespannt wird.

Mit anderen Worten rasten die Rastvorsprünge 526, 528 stets vollständig in den ersten und zweiten Rastaussparungen 558, 560, 568, 570 ein, ohne dass in dem Glied zur Aufnahme der Rastvorsprünge 526, 528 Ausarbeitungen erforderlich sind.

Die Längenerstreckung der ersten Rastaussparungen 558, 560 ist größer als die der Rastvorsprünge 526, 528. Ungeachtet dessen erfolgt ein Verrasten ohne Spiel, da die Quererstreckung der ersten Rastaussparungen 558, 560 geometrisch der Breite und dem Verlauf der Rastvorsprünge 526, 528 angepasst ist, d.h., dass die Seitenflächen der Rastvorsprünge 526, 528, von denen zwei beispielhaft mit dem Bezugszeichen 548, 550 gekennzeichnet sind, in der verrasteten Stellung an den Seitenwandungen der ersten und zweiten Rastaussparungen 558, 560 bzw. 568, 570 anliegen. Rein beispielhaft sind Seitenflächen mit den Bezugszeichen 580, 582 gekennzeichnet.

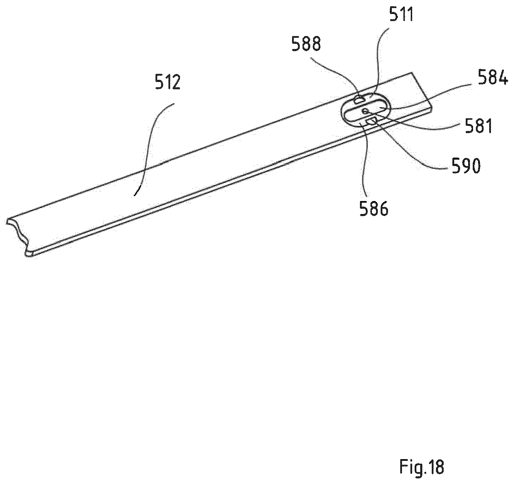

In Fig. 18 ist ein Abschnitt eines Gliedes 512 mit einer in dieser ausgearbeiteten Vertiefung 511 dargestellt, um die Tiefplatte 516 aufzunehmen. Die Vertiefung 511 besteht aus einem von einer Bohrung 581 durchsetzten sich entlang der Längsachse des Glieds 512 erstreckenden ersten Abschnitts 584, innerhalb dem sich die ersten Rastaussparungen 558, 560 erstrecken. In Richtung der Oberfläche des Glieds 512 nach oben versetzt erstreckt sich ein zweiter Abschnitt 586, in dem Aussparungen 588, 590 ausgebildet sind, die sich über den Rand der Vertiefung 511 in Richtung der Längsränder des Gliedes 512 erstrecken, um die zweiten Rastaussparungen 568, 570 aufzunehmen. Die Höhe des Abstands der Oberfläche des Abschnitts 586 zur Oberfläche des Glieds 512 entspricht der Dicke des plattenförmigen Basiskörpers 562, so dass beim Befestigen der Tiefplatte 516 an dem Glied 512 die Oberfläche des Basiskörpers 562 fluchtend zur Oberfläche des Glieds 512 verläuft.

Die Achse, um die die Glieder schwenkbar sind, durchsetzt die Bohrung 581 mittig.

Unabhängig von den Ausführungsformen in Bezug auf die Gestaltung der Rastvorsprünge und Rastvertiefungen und deren Geometrien ist insbesondere vorgesehen, dass die Eintauchtiefe der Rastvorsprünge in die Rastaussparungen unabhängig von der gewählten Raststellung, also einerseits 0° bzw. 180°, und andererseits entsprechend der Ausführungsbeispiele 90°, die Eintauchtiefe gleich ist, wie dies zuvor auch erläutert worden ist.

## Patentansprüche

1. Gliedermaßstab mit langgestreckten flachen Gliedern, die paarweise über eine Gelenkverbindung miteinander und um eine Achse (424) drehbar verbunden sind, wobei die Gelenkverbindung eine erste mit einem ersten Glied und eine zweite mit einem zweiten Glied verbundene Gelenkplatte (414, 452) aufweist, und wobei
- die erste Gelenkplatte (414) zwei insbesondere diametral zu der Achse angeordnete erste Rastvorsprünge (426, 428) aufweist, und
- die zweite Gelenkplatte zwei erste Rastaussparungen (458, 459) aufweist,
wobei die Gelenkplatten in einer ersten Position bei vollständig gefaltet oder fluchtend zueinander ausgerichteten Gliedern verrasten und in einer zweiten Position verrasten, in der die Glieder zueinander einen Winkel α, insbesondere α = 90°, einschließen,
wobei die erste Gelenkplatte (414) zumindest eine weitere Rastaussparung (460, 462) in Form eines Freibereichs in der ersten Gelenkplatte und die zweite Gelenkplatte (452) zumindest einen weiteren Rastvorsprung (484, 486) aufweist, wobei der zumindest eine weitere Rastvorsprung (484, 486) in einem federnden Abschnitt (480, 482) der zweiten Gelenkplatte (452) ausgebildet ist oder von diesem ausgeht, wobei in der ersten Position der Glieder die zwei ersten Rastvorsprünge (426, 428) der ersten Gelenkplatte (414) in die zwei ersten Rastaussparungen (458, 459) der zweiten Gelenkplatte (452) einrasten und in der zweiten Position der zumindest eine weitere Rastvorsprung (484, 486) der zweiten Gelenkplatte in die zumindest eine weitere Rastaussparung (460, 462) der ersten Gelenkplatte einrastet.

2. Gliedermaßstab nach Anspruch 1,
**dadurch gekennzeichnet,**
**dass** die erste Gelenkplatte (414) eine weitere Rastaussparung (460, 462) und die zweite Gelenkplatte (452) zwei weitere Rastvorsprünge (484, 486) oder die erste Gelenkplatte zwei weitere Rastvorsprünge und die zweite Gelenkplatte eine weitere Aussparung oder die erste Gelenkplatte zwei weitere Rastaussparungen und die zweite Gelenkplatte zwei weitere Rastvorsprünge aufweisen, wobei insbesondere die zwei weiteren Rastaussparungen (460, 462) und/oder die zwei weiteren Rastvorsprünge (484, 486) diametral gegenüberliegend zu der Achse (424) angeordnet sind.

3. Gliedermaßstab nach Anspruch 1,
**dadurch gekennzeichnet,**
**dass** der Freibereich eine Ausstanzung (460, 462) in der ersten Gelenkplatte (414) ist.

4. Gliedermaßstab nach zumindest einem der vorhergehenden Ansprüche,
**dadurch gekennzeichnet,**
**dass** die zweite Gelenkplatte (452) zwei erste Rastaussparungen (458, 459) und zwei weitere Rastvorsprünge (484, 486) aufweist, die entlang einer gemeinsamen Geraden angeordnet sind, die die Achse (424) schneidet.

5. Gliedermaßstab nach zumindest einem der vorhergehenden Ansprüche,
**dadurch gekennzeichnet,**
**dass** der federnde Abschnitt (480, 482) durch einen bereichsweise freigeschnittenen Bereich der zweiten Gelenkplatte (452) gebildet ist.

6. Gliedermaßstab nach zumindest einem der vorhergehenden Ansprüche,
**dadurch gekennzeichnet,**
**dass** der zumindest eine weitere Rastvorsprung (484, 486) eine kugelabschnittförmige Geometrie aufweist.

## Claims

1. A folding ruler having elongated and flat links connected to one another in pairs by a joint connection and rotatably about an axis (424), wherein the joint connection has a first joint plate (414) connected to a first link and a second joint plate (452) connected to a second link, and wherein
- the first joint plate (414) has two first locking projections (426, 428) arranged in particular diametrically to the axis, and
- the second joint plate has two locking recesses (458, 459),
wherein the joint plates lock in a first position when the links are completely folded or aligned flush with one another, and lock in a second position in which the links form an angle α, in particular α = 90°, to one another,
wherein the first joint plate (414) has at least one further locking recess (460, 462) in the form of a free area in the first joint plate, and the second joint plate (452) has at least one further locking projection (484, 486), wherein the at least one further locking projection (484, 486) is formed in a springy section (480, 482) of the second joint plate (452) or extends therefrom, wherein in the first position of the links the two first locking projections (426, 428) of the first joint plate (414) engage in the two first locking recesses (458, 459) of the second joint plate (452), and in the second position the at least one further locking projection (484, 486) of the second joint plate engages in the at least one further locking recess (460, 462) of the first joint plate.

2. The folding ruler according to claim 1,
**characterized in**
**that** the first joint plate (414) has one further locking recess (460, 462) and the second joint plate (452) has two further locking projections (484, 486), or the first joint plate has two further locking projections and the second joint plate has one further recess, or the first joint plate has two further locking recesses and the second joint plate has two further locking projections, wherein in particular the two further locking recesses (460, 462) and/or the two further locking projections (484, 486) are arranged diametrically opposite the axis (424).

3. The folding ruler according to claim 1,
**characterized in**
**that** the free area is a punched-out hole (460, 462) in the first joint plate (414).

4. The folding ruler according to at least one of the preceding claims,
**characterized in**
**that** the second joint plate (452) has two first locking recesses (458, 459) and two further locking projections (484, 486) arranged along a common straight line that intersects the axis (424).

5. The folding ruler according to at least one of the preceding claims,
**characterized in**
**that** the springy section (480, 482) is formed by an area, cut clear in some parts, of the second joint plate (452).

6. The folding ruler according to at least one of the preceding claims,
**characterized in**
**that** the at least one further locking projection (484, 486) has a spherical segment-shaped geometry.

## Revendications

1. Mètre pliant composé de segments plats allongés qui sont reliés ensemble par paire au moyen d'un raccord articulé et de manière pivotable autour d'un axe (424), sachant que le raccord articulé présente une première plaque d'articulation (414) reliée à un premier segment et une seconde plaque d'articulation (452) reliée à un second segment, et sachant que
- la première plaque d'articulation (414) présente deux premières saillies d'encliquetage (426, 428) disposées notamment diamétralement par rapport à l'axe, et que
- la seconde plaque d'articulation présente deux premiers évidements d'encliquetage (458, 459),
sachant que les plaques d'articulation s'encliquettent dans une première position avec les membres complètement pliés ou alignés les uns aux autres et s'encliquettent dans une seconde position dans laquelle les membres forment entre eux un angle α, notamment α = 90°,
sachant que la première plaque d'articulation (414) présente au moins un autre évidement d'encliquetage (460, 462) sous forme de zone libre dans la première plaque d'articulation et que la seconde plaque d'articulation (452) présente au moins une autre saillie d'encliquetage (484, 486), sachant que ladite au moins une autre saillie d'encliquetage (484, 486) est constituée dans une section élastique (480, 482) de la seconde plaque d'articulation (452) ou part de celle-ci, sachant que dans la première position des membres, les deux premières saillies d'encliquetage (426, 428) de la première plaque d'articulation (414) s'encliquettent dans les deux premiers évidements d'encliquetage (458, 459) de la seconde plaque d'articulation (452) et que, dans la seconde position, ladite au moins une autre saillie d'encliquetage (484, 486) de la seconde plaque d'articulation s'encliquette dans ledit au moins un autre évidement d'encliquetage (460, 462) de la première plaque d'articulation.

2. Mètre pliant selon la revendication 1,
**caractérisé en ce**
**que** la première plaque d'articulation (414) présente un autre évidement d'encliquetage (460, 462) et que la seconde plaque d'articulation (452) présente deux autres saillies d'encliquetage (484, 486) ou que la première plaque d'articulation présente deux autres saillies d'encliquetage et que la seconde plaque d'articulation présente un autre évidement ou que la première plaque d'articulation présente deux autres évidements d'encliquetage et que la seconde plaque d'articulation présente deux autres saillies d'encliquetage, sachant que notamment les deux autres évidements d'encliquetage (460, 462) et/ou les deux autres saillies d'encliquetage (484, 486) sont disposés diamétralement opposés à l'axe (424).

3. Mètre pliant selon la revendication 1,
**caractérisé en ce**
**que** la zone libre est une découpe (460, 462) dans la première plaque d'articulation (414).

4. Mètre pliant selon au moins l'une des revendications précédentes,
**caractérisé en ce**
**que** la seconde plaque d'articulation (452) présente deux premiers évidements d'encliquetage (458, 459) et deux autres saillies d'encliquetage (484, 486) qui sont disposés le long d'une droite commune qui coupe l'axe (424).

5. Mètre pliant selon au moins l'une des revendications précédentes,
**caractérisé en ce**
**que** la section élastique (480, 482) est formée par une zone découpée partiellement de la seconde plaque d'articulation (452).

6. Mètre pliant selon au moins l'une des revendications précédentes,
**caractérisé en ce**
**que** ladite au moins une autre saillie d'encliquetage (484, 486) présente une géométrie en forme de segment sphérique.
